# EUROPEAN PATENT SPECIFICATION

(11) **EP 2 428 717 B1**
(45) Date of publication and mention of the grant of the patent: **07.05.2014**
(21) Application number: 10425294.5
(22) Date of filing: 09.09.2010
(51) Int. Cl.: F16L 17/067, F16L 37/08, F16L 37/12, F16J 15/06

(54) **Gasket for quick couplings**
Dichtung für Schnellkupplungen
Joint pour couplages rapides

(43) Date of publication of application: 14.03.2012
(73) Proprietor: Faster S.p.A., 20124 Milan (IT)
(72) Inventor: Ferrara, Rocco, 24045 Fara Gera d'Adda (IT); Rambaldini, Mauro, 20063 Cernusco sul Naviglio (IT); Rusconi, Paolo, 26027 Rivolta d'Adda (IT)
(74) Representative: Borsano, Corrado

(56) References cited:
- CN-Y- 201 103 690
- GB-A- 926 789
- NL-A- 6 616 577
- US-A- 3 620 556

## Description

The present invention relates to a sealing gasket for quick couplings.

In particular, the gasket object of the present invention is a sealing gasket suitable for being installed frontally on quick couplings of the type object of the European patent application no. 09425300.2 assigned to the same applicant.

Several solutions are known from the state of the art for making the frontal seal of quick couplings. NL6616577A discloses a pipe coupling provided with a sealing gasket with a transversal section profile which comprises a front lip.

In particular, the above-mentioned patent application entitled to the same applicant shows a quick coupling in which the frontal seal Is obtained by means of a simple o-ring, or a ring gasket having a circular section.

However, the state of the art has many other technical solutions aiming to facilitate and especially to speed up the connection and disconnection operations of threaded couplings. In fact, when, for final testing needs during the testing step, it is required to quickly connect and disconnect to the control apparatus the piece to test and when the connecting interface is a normalized female thread (e.g. according to ISO, SAE, DIN and similar standards), the technical solution is represented by quick couplings capable of ensuring not only the mechanical connection, but also, naturally, the fluid seal with the fluid under pressure.

Examples of such applications in which the seal between the quick coupling and the piece to test, generally equipped with internal thread (female) represented by a classic o-ring normalized and assembled in normalized seats, are shown In preceding patents DE3635264, DE10319476A1 and DD66.753A1.

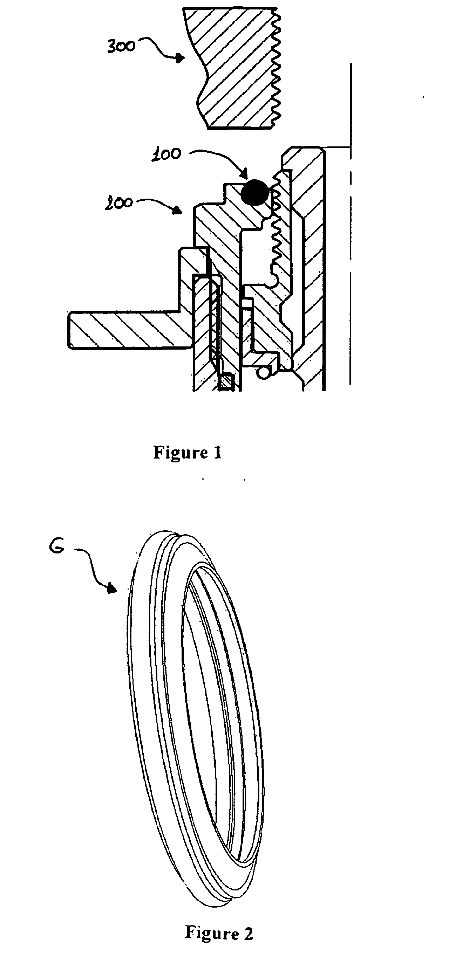

Preceding documents EP1479962A1 and EP1876381A1 entitled to the same applicant and the above-mentioned patent application 09425300.2 (an image of which is shown in figure 1) also show the use of frontal sealing gaskets, all these gaskets being of the o-ring type having a circular section, indicated with the reference number 100 in figure 1. The coupling is indicated with the reference number 200, and the external element whose coupling should be connected and on which the gasket should make the seal, with the number 300.

However, the use of o-ring gaskets for making the frontal seal in the quick couplings of the type under discussion is not exempt from drawbacks.

In particular, important technical-functional problems have emerged relating to the seal, especially when there is low pressure and side loads (phenomenon known as "bending") due to the weight of the piping.

In order to make the seal desired, the gaskets of the type known from the state of the art should work with a given load value. Hence, to ensure the seal also at low pressures, the use of an internal load spring is provided in the coupling which in some manner succeeds in limiting the seal problems, however in this case the elevated load due to the spring requires providing a linkage to perform the connection and disconnection manoeuvres, while the connection in the device object of European patent application 09425300.2 entitled to the same applicant, occurs by means of an axial thrust by the operator.

The peculiar characteristic distinguishing the quick coupling object of the European patent application 09425300.2, entitled to the same applicant, which, as mentioned, figure 1 shows a peculiarity of, consists in the fact of having a plurality of threaded elements divided into sectors. By lowering during the coupling step and blocking in expanded position having connected coupling, these threaded elements make the mechanical seal between the parts to couple.

However, the mechanical seal obtained by the grip of the circular sectors is not sufficient to ensure the fluid seal. In fact, the applications in which these couplings are employed also require a perfect seal of the coupling coupled in all the positions and conditions of pressure.

It is therefore essential that the fluid seal is ensured and that the coupling is in a vertical and horizontal position.

Again, the fluid seal should also be guaranteed when there is a side load, due e.g. to the weight itself of the piping connected to the coupling.

The perfect seal should then also be guaranteed, once the coupling is connected, when there is elevated pressure (in excess of 350 bar) and there are square wave impulses.

Again, the perfect fluid seal should also be guaranteed at very low pressures (within some millibars) also when there is clearance within approximately 0.3-0.8 mm between the frontal part of the coupling and the element to connect. Such clearance is mainly due to the tolerances typical of normalized threads and is also due to the fact that the connection is not made by screwing until contact is achieved, rather simply by pushing the coupling.

A further requirement that should be met by the seal of the coupling being discussed is the lack of overturning or of extrusion of the gasket when there are also strong capacities and/or square wave pressure impulses.

Not lastly, the gasket should be easily replaceable when the same is damaged and should be made of a strong while at the same time highly flexible material with elastic return and resistance to abrasion and fatigue.

It is therefore the primary task of the present invention to provide a sealing gasket particularly for quick couplings, which allows the drawbacks afflicting the solutions of known type, to be overcome.

Within the scope of this task, it is the particular object of the present invention to provide a sealing gasket particularly for quick couplings, and which ensures an effective fluid seal in all the conditions described above.

This task and these and other objects which shall become more apparent hereinafter are achieved by a sealing gasket according to the claims in the appended claim 1.

Further features and advantages of the present invention will become more apparent from the following detailed description, provided by way of non-limiting example and illustrated in the accompanying drawings, in which:
figure 1 shows a peculiarity of a coupling object of patent application by the same applicant on which a traditional o-ring gasket is mounted to make the frontal seal between coupling and external element to connect;
figure 2 shows a comprehensive perspective view of the gasket object of the present invention;
figure 3 shows a section with a transversal plane of the gasket object of the present invention shown in figure 2;
figure 4 shows, in detail, the profile of the section of the gasket according to the present invention;
figures 5 and 6 show a comprehensive view and an enlargement with a partial sectional view, respectively, of a coupling comprising the gasket according to the present invention;
figures 7 and 8 show a comprehensive view and an enlargement with a partial sectional view, respectively, of a coupling comprising a frontal seat suitable for receiving the gasket object of the present invention.

According to a preferred embodiment of the present invention illustrated in the figures mentioned by way of non-limiting example, the gasket according to the present invention has the particular profile shown particularly in accompanying figures **2**, **3** and **4**. The transversal section of the gasket **G** according to the present invention has an asymmetrical shape in which a lip 1, the sealing planes **2a** and **2b**, an internal flash ring **3**, a rear step **4**, a rounded external portion **5** and a front shoulder plane **6**, are identifiable.

The front lip indicated with reference number **1** is among the elements most characterizing the transversal profile of the gasket according to the present invention. Traditionally, gaskets having a lip have always been used as oil scrapers when, in the absence of internal pressure, said lip serves the function of preventing the entry of dirt on the sealing surfaces, or as static or dynamic sealing elements in the case of related running elements (cylinders) with slight misalignments.

However, in all these applications, the gasket is always well-protected, inserted in a seat *ad hoc* which holds the gasket in seat on the four sides and the clearances between the elements are defined beforehand by the project.

Instead, in the case of the gasket according to the present invention, the lip should guarantee the frontal seal with a normalized external element (the threading) but subject to variable, not easily predictable clearances. Again, the connection may be subject to elevated bending phenomena, a well-known phenomenon in the field of connections. These problems afflict the connection both under vacuum or low pressure and under high pressure. This is therefore an entirely new situation of employment for a gasket having lip, in fact, as shown previously, only examples of use of o-ring gaskets are known in the field.

From a physical and mechanical viewpoint, the gasket should have significant tenacity and resistance to abrasion and wear as it is coupled and uncoupled many times with repeated cycles of pressure and capacity. However, in addition to these characteristics, the gasket object of the present invention should also have a controlled flexibility which at the same time allows sufficient pre-loading when there is elevated clearance, and a sufficient ability to adapt to misalignments, elevated facility of assembly and replacement but also resistance to peaks or impulses of pressure.

To this end, it is therefore known that a too robust lip could significantly limit the deformation when pre-loading, while a too thin lip could be inadequately resistant to elevated pressures. Thus, the importance of the particular profile object of the present invention.

The length of the lip is also an extremely important parameter: a too long lip could cause phenomena of sticking on the peaks of the threaded sectors thus limiting the functionality of the coupling, while contrarily, a too short lip could significantly limit the seal and the flexibility when there is bending, thus promoting the fluid to leak.

The lip **1** terminates with the sealing planes **2a** and **2b** which define the contact surfaces with the sealing surface of the device. When the coupling is connected, the sealing planes **2a** and **2b** of the lip **1** are the first to come into contact with the sealing surface. The flat conformation guarantees a sufficient contact surface of the lip under all conditions, also when there is elevated clearance between the parts.

Moreover, sealing planes **2a** and **2b** contribute to strengthening the end part of the lip, which is the part most subjected to phenomena of abrasion, wear and damage due to repeated movements.

The gasket **G** is able of guaranteeing an excellent vacuum seal also on surfaces not perfectly smooth, due to the increased contact surface provided by the sealing planes **2a** and **2b**.

The gasket **G**, indicated with reference number **3**, then has an internal flash ring which must absolve a functional task just as important as the sealing lip. Due to its particular conformation, in particular due to its particular sizing of the connecting rays with the other parts, sufficient flexibility is guaranteed to the frontal lip and a correct division of the mass without weakening it, in order to optimize the process of obtaining the gasket itself by moulding.

The correct sizing of the ring with suitable sizing of the connecting rays combined with the choice of material of the gasket itself not only results in an outwards radial thrust component (typical i.e. of the seal with o-ring gasket) being created in work conditions with pressure in the coupling, but also an axial thrust component against the sealing surface.

The greater the internal pressure of the fluid crossing the coupling, the greater the axial thrust action of the gasket against the sealing surface due to this contrivance, and, consequently, the greater the seal itself.

At the same time, the outward radial component, which is the thrust action most responsible for the extrusion of the gasket or the gasket coming out of its seat, becomes almost negligible with respect to the axial thrust component with significant benefits in terms of resistance to wear.

The gasket **G**, on the side surface opposite to said lip **1**, the one in contact with the coupling, has a step, indicated in the figures with reference number **4**, which performs an anti-overturning or anti-extrusion function by in fact opposing the gasket itself from coming out of its seat.

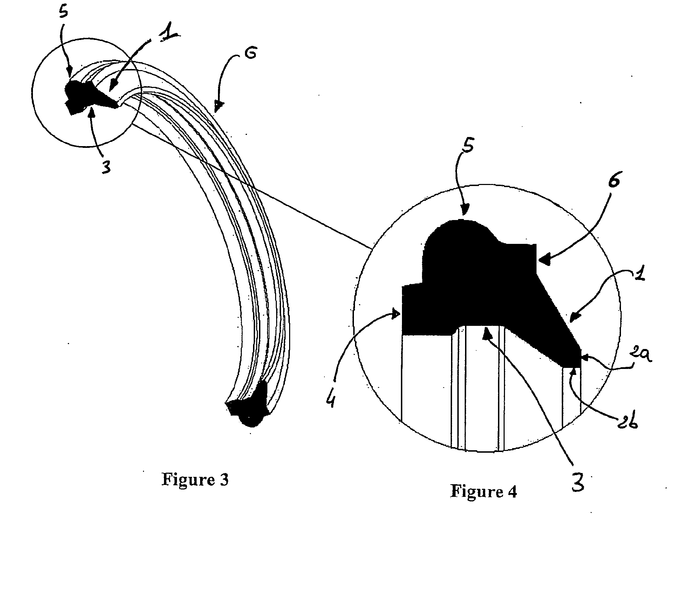

In fact, when the coupling is connected and inserted into the threaded seat, the front lip of the gasket **G** is compressed inwards, i.e. by rotating clockwise as depicted in figure 4, while inducing a rotation moment to the entire section of the gasket. If this movement were not limited by the anti-overturning step **4** with which the gasket **G** is inserted coupling side in its own seat, a reduction of the frontal pre-load of the lip **1** would be caused with great limitation of the vacuum and low pressure seal, and during bending and elevated clearances.

Moreover, the anti-overturning step allows better size control of the profile of the gasket, especially in terms of the distance between the rear plane and the front shoulder plane.

Then, indicated with reference number **5** is a rounded profile on the external surface opposite to the one in which the flash ring **3** is obtained. The particular rounded profile of this section of gasket **G** guarantees significant facility of insertion of the gasket in its seat, and ensures, together with the rear step **4**, the correct positioning of the gasket itself in its seat, and also guarantees the diametral seal in radial direction, due to the fact that the external diameter of the gasket is always greater than the corresponding external diameter of the seat. This aspect will be illustrated again below when the profile of the seat is described.

Finally, the profile of the gasket **G** is characterized by a front shoulder plane, indicated in the accompanying figures with the reference number **6**. The front shoulder plane **6** also ensures countering of the extrusion of the gasket from its seat when it is pressurized. The outwards radial component of the pressure which acts on the lip **1** in fact causes a moment of outwards counterclockwise rotation of the section of gasket.

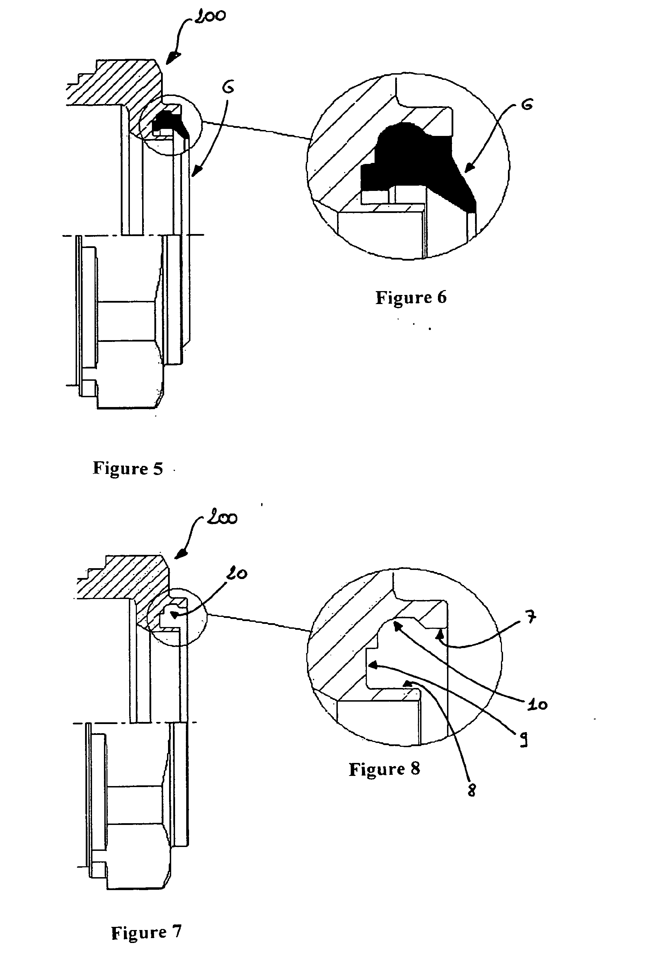

The extrusion of the gasket is prevented due to the front shoulder **6** and to its external diameter having straight section resting on the seat of the gasket. In the same way it is very important that the front shoulder of the gasket is always retracted, or at most, in line, with respect to the frontal plane of the seat, so as not to hinder the metal contact between the two sealing surfaces. This peculiarity can be seen in detail in figure 6.

At high pressures, this contrivance guarantees perfect containment of the gasket between the two metal parts in contact. Instead, at low pressures, the effect of bending due e.g. to the weight of the pipings, is significantly limited.

The particular profile has therefore been illustrated which characterizes the gasket object of the present invention, specifically conceived to optimize the conduct and the seal of quick couplings of the type described above.

The gasket characterized by the profile described to now is preferably made with polyurethane (PUR) and is obtained by means of turning or moulding process. The choice of the material naturally affects the conduct of the gasket, in particular of the lip **1** which carries out the fluid seal, and therefore the choice of the material should be accurately performed, and the polyurethane or materials having mechanical characteristics similar to polyurethane are therefore preferred.

Obviously, the gasket **G** described to now should be inserted in a seat conveniently formed, therefore the coupling should provide such seat in order to correctly receive the gasket **G**.

Such seat **20** is illustrated in figures 7 and 8, while figures 5 and 6 show the gasket inserted in said seat.

Therefore, with particular reference to figures 7 and 8, the seat **20** has a shoulder section **7** which serves as anti-rotation element during the pressurization. As said and visible in the peculiarity in figure 6, the front shoulder plane **6** of the gasket is retracted, or at most could be in line, with respect to the frontal plane of the seat **20**, so as not to hinder the metal contact between the two sealing surfaces. Therefore the diameter or section of shoulder **7** of the seat **20** is greater or at most equal to the size of the front shoulder plane **6** of the gasket.

It is apparent in the enlargement in figure 6, which illustrates the gasket **G** inserted in the seat **20**, how the section or diameter of shoulder **7** protrudes frontally with respect to the front shoulder plane 6 of the gasket.

The internal diameter of the seat **20** is then indicated with reference number **8**, which should be conveniently sized to promote an easy assembly of the gasket and an easy replacement when required. Again, the length of the section or internal diameter **8** should be such to not to hinder the folding of the lip **1** when this is compressed, when it carries out the seal.

The length of the section **8** should in any event be such to allow the internal flash ring **3** on the gasket **G** to be pressurized when the lip **1** is folded, without introducing localized losses of loads or, worse, undesired seals.

Continuing the description of the internal profile of the seat **20**, indicated with reference number **9** is a seat suitable for welcoming the rear step **4** of the gasket.

Finally, the seat is indicated with reference number **10**, suitable for receiving the external rounded portion **5** of the gasket, suitably formed to promote the insertion of the gasket itself in the seat and sized suitably to confer the convenient diametral compression to the gasket.

It has thus been shown how the gasket object of the present invention achieves the object and the purposes proposed.

In particular, it has been illustrated how the gasket according to the present invention ensures the perfect seal under all conditions of use, both with coupling in vertical and horizontal position, and with elevated pressures and low pressures of the operating fluid.

Again, more in detail, the gasket according to the present invention optimizes the fluid seal also with the coupling in horizontal position and with low pressures of the fluid, less than 10 bar.

The gasket object of the present invention has shown to be capable of ensuring a perfect seal also with high pressures, also exceeding 350 bar, as it is mainly subject to a thrust having an axial component against the sealing surface. The particular shape of the thrust ring of the object gasket therefore also contributes to resolving the problem connected with the seal under pressure conditions having impulses or square wave.

Again, it has been illustrated how the gasket according to the present invention ensures a perfect seal also when there is a side load due to the weight of the piping connected to the coupling (bending), thus resolving an important drawback left unresolved by the state of the art.

Again, it has been illustrated how the gasket according to the present invention allows the negative effect of the clearances between the frontal part of the coupling and the element to connect, to be neutralized, thus resolving the problem of the leaks of fluid at low and very low pressure.

As mentioned, the gasket according to the present invention also resolves the problem of extrusion in the case of elevated capacities and/or pressures having square wave impulses, and the particular material chosen for making the gasket allows an adequate elastic return, tenacity and resistance to abrasion to be ensured.

## Claims

1. A sealing gasket (G) for quick couplings, in which the profile of the transversal section comprises at least one front lip (1) suitable for guaranteeing the frontal seal with an external element, **characterized in that** the front surface of said gasket (G) comprises a front shoulder plane (6) and **in that** said front lip (1) protrudes from said front shoulder plane (6), the lip (1) forming an obtuse angle with said front shoulder plane (6), and **in that** said profile of the transversal section further comprises at least one flash ring (3) at the internal face of said gasket, at least one step (4) at the rear surface of the gasket opposite to said front lip (1) and an external rounded portion (5) provided at the external face of said gasket, opposite to said flash ring (3), said front shoulder plane (6) being located at the vertex between the front surface and the external surface of said gasket opposite to the one in which said flash ring (3) is obtained.

2. A gasket (G) according to claim 1, **characterized in that** said front lip (1) ends apically with one or more sealing planes (2a, 2b) adapted to provide the contact and the seal against the sealing surface of the external element.

3. A gasket (G) according to one or more of the preceding claims, **characterized in that** it is made with polyurethane.

4. A quick coupling comprising the gasket (G) according to one or more of the preceding claims.

5. A quick coupling according to claim 4, **characterized in that** it comprises a seat (20) suitable for receiving said gasket (G) in frontal position.

6. A quick coupling according to claim 5, **characterized in that** said seat (20) comprises at least one section of shoulder (7) adapted to prevent the rotation of the gasket when the coupling is pressurized, at least one internal section (8) having extension such as to not hinder the folding of the lip (1) of said gasket (G) when compressed, at least one seat (9) suitable for welcoming the rear step (4) of said gasket (G), and at least one seat (10) suitable for receiving the external rounded portion (5) of said gasket.

7. A gasket (G) according to one or more of the preceding claims, **characterized in that** it is made with polyurethane.

8. A quick coupling comprising the gasket (G) according to one or more of the preceding claims.

9. A quick coupling according to claim 8, **characterized in that** it comprises a seat (20) suitable for receiving said gasket (G) in frontal position.

10. A quick coupling according to claim 9, **characterized in that** said seat (20) comprises at least one section of shoulder (7) adapted to prevent the rotation of the gasket when the coupling is pressurized, at least one internal section (8) having extension such as to not hinder the folding of the lip (1) of said gasket (G) when compressed, at least one seat (9) suitable for welcoming the rear step (4) of said gasket (G), and at least one seat (10) suitable for receiving the external rounded portion (5) of said gasket.

## Patentansprüche

1. Dichtungselement (G) für Schnellkupplungen, in welchem das Profil des Querschnitts zumindest eine vordere Lippe (1) umfasst, die zur Gewährleistung der frontalen Abdichtung mit einem äußeren Element geeignet ist,
**dadurch gekennzeichnet, dass** die vordere Fläche der Dichtung (G) eine vordere Schulterebene (6) umfasst, und dass die vordere Lippe (1) von der vorderen Schulterebene (6) vorsteht, wobei die Lippe (1) einen stumpfen Winkel mit der vorderen Schulterebene (6) bildet, und dass das Profil des Querschnitts ferner zumindest einen Quetschring (3) an der Innenseite der Dichtung, und zumindest eine Stufe (4) an der hinteren Fläche der Dichtung entgegengesetzt zu der vorderen Lippe (1) und einen äußeren gerundeten Abschnitt (5) umfasst, der an der Außenseite der Dichtung gegenüber dem Quetschring (3) vorgesehen ist, wobei die vordere Schulterebene (6) an dem Scheitel zwischen der vorderen Fläche und der äußeren Fläche der Dichtung entgegengesetzt zu der einen, in der der Quetschring (3) erhalten ist, angeordnet ist.

2. Dichtung (G) nach Anspruch 1,
**dadurch gekennzeichnet, dass** die vordere Lippe (1) spitzwinklig mit einer oder mehreren Dichtebenen (2a, 2b) endet, die ausgebildet sind, um den Kontakt und die Abdichtung gegen die Dichtfläche des äußeren Elements vorzusehen.

3. Dichtung (G) nach einem oder mehreren der vorhergehenden Ansprüche, **dadurch gekennzeichnet, dass** sie mit Polyurethan hergestellt ist.

4. Schnellkupplung, die die Dichtung (G) nach einem oder mehreren der vorhergehenden Ansprüche umfasst.

5. Schnellkupplung nach Anspruch 4,
**dadurch gekennzeichnet, dass** sie einen Sitz (20) umfasst, der zur Aufnahme der Dichtung (G) in frontaler Position geeignet ist.

6. Schnellkupplung nach Anspruch 5,
**dadurch gekennzeichnet, dass** der Sitz (20) zumindest ein Teilstück von Schulter (7), das ausgebildet ist, um die Drehung der Dichtung zu verhindern, wenn die Kupplung unter Druck gesetzt ist, zumindest ein inneres Teilstück (8), das eine Ausdehnung aufweist, so dass das Umschlagen der Lippe (1) der Dichtung (G) nicht behindert wird, wenn sie zusammengedrückt wird, zumindest einen Sitz (9), der geeignet ist, um die hintere Stufe (4) der Dichtung (G) in Empfang zu nehmen, und zumindest einen Sitz (10) umfasst, der geeignet ist, den äußeren gerundeten Abschnitt (5) der Dichtung aufzunehmen.

7. Dichtung (G) nach einem oder mehreren der vorhergehenden Ansprüche,
**dadurch gekennzeichnet, dass** sie mit Polyurethan hergestellt ist.

8. Schnellkupplung, die die Dichtung (G) nach einem oder mehreren der vorhergehenden Ansprüche umfasst.

9. Schnellkupplung nach Anspruch 8,
**dadurch gekennzeichnet, dass** sie einen Sitz (20) umfasst, der zur Aufnahme der Dichtung (G) in frontaler Position geeignet ist.

10. Schnellkupplung nach Anspruch 9,
**dadurch gekennzeichnet, dass** der Sitz (20) zumindest ein Teilstück von Schulter (7), das ausgebildet ist, um die Drehung der Dichtung zu verhindern, wenn die Kupplung unter Druck gesetzt ist, zumindest ein inneres Teilstück (8), das eine Ausdehnung aufweist, so dass das Umschlagen der Lippe (1) der Dichtung (G) nicht behindert wird, wenn sie zusammengedrückt wird, zumindest einen Sitz (9), der geeignet ist, um die hintere Stufe (4) der Dichtung (G) aufzunehmen, und zumindest einen Sitz (10) umfasst, der geeignet ist, den äußeren gerundeten Abschnitt (5) der Dichtung aufzunehmen.

## Revendications

1. Joint d'étanchéité (G) pour des couplages rapides, où le profil de la section transversale comprend au moins une lèvre frontale (1) apte à garantir l'étanchéité frontale avec un élément externe, **caractérisé en ce que** la surface frontale dudit joint (G) comprend un plan d'épaulement avant (6), et **en ce que** ladite lèvre frontale (1) fait saillie dudit plan d'épaulement frontal (6), la lèvre (1) formant un angle obtus avec ledit plan d'épaulement avant (6), et **en ce que** ledit profil de la section transversale comprend en outre au moins une bague encastrée (3) à la face intérieure dudit joint, au moins un gradin (4) à la surface arrière du joint opposée à ladite lèvre frontale (1) et une portion externe arrondie (5) réalisée à la face externe dudit joint, opposée à ladite bague encastrée (3), ledit plan d'épaulement frontal (6) étant situé au sommet entre la surface frontale et la surface externe dudit joint opposée à celle dans laquelle ladite bague encastrée (3) est obtenue.

2. Joint d'étanchéité (G) selon la revendication 1, **caractérisé en ce que** ladite lèvre frontale (1) se termine à l'apex avec un ou plusieurs plans d'étanchéité (2a, 2b) aptes à établir le contact et l'étanchéité contre la surface d'étanchéité de l'élément externe.

3. Joint d'étanchéité (G) selon une ou plusieurs revendications précédentes, **caractérisé en ce que** celui-ci est réalisé avec du polyuréthane.

4. Couplage rapide comprenant le joint d'étanchéité (G) selon l'une ou plusieurs des revendications précédentes.

5. Couplage rapide selon la revendication 4, **caractérisé en ce qu'**il comprend un siège (20) apte à recevoir ledit joint d'étanchéité (G) dans une position frontale.

6. Couplage rapide selon la revendication 5, **caractérisé en ce que** ledit siège (20) comprend au moins une section d'épaulement (7) apte à prévenir la rotation du joint d'étanchéité lorsque le couplage est mis en pression, au moins une section interne (8) ayant une extension de manière à ne pas empêcher le pliage de la lèvre (1) dudit joint d'étanchéité (G) lorsqu'il est compressé, au moins un siège (9) apte à recevoir le gradin arrière (4) dudit joint d'étanchéité (G), et au moins un siège (10) apte à recevoir la portion externe arrondie (5) dudit joint d'étanchéité.

7. Joint d'étanchéité (G) selon une ou plusieurs des revendications précédentes, **caractérisé en ce qu'**il est réalisé avec du polyuréthane.

8. Couplage rapide comprend le joint d'étanchéité (G) selon l'une ou plusieurs des revendications précédentes.

9. Couplage rapide selon la revendication 8, **caractérisé en ce qu'**il comprend un siège (20) apte à recevoir ledit joint d'étanchéité (G) en une position frontale.

10. Couplage rapide selon la revendication 9, **caractérisé en ce que** ledit siège (20) comprend au moins une section d'épaulement (7) apte à prévenir la rotation du joint d'étanchéité lorsque le couplage est mis en pression, au moins une section interne (8) ayant une extension de manière à ne pas empêcher le pliage de la lèvre (1) dudit joint d'étanchéité (G) lorsqu'il est compressé, au moins un siège (9) apte à recevoir le gradin arrière (4) dudit joint d'étanchéité (G), et au moins un siège (10) apte à recevoir la portion externe arrondie (5) dudit joint d'étanchéité.
